Europäisches Patentamt

European Patent Office

Office européen des brevets

(19)

(11) Veröffentlichungsnummer: **0 344 440**
**A2**

(12) ## EUROPÄISCHE PATENTANMELDUNG

(21) Anmeldenummer: 89106986.6

(22) Anmeldetag: 19.04.89

(51) Int. Cl.$^4$: **C08L 69/00** , //(C08L69/00, 65:00)

(30) Priorität: 03.06.88 DE 3818871

(43) Veröffentlichungstag der Anmeldung:
06.12.89 Patentblatt 89/49

(84) Benannte Vertragsstaaten:
AT BE CH DE ES FR GB IT LI LU NL SE

(71) Anmelder: HÜLS AKTIENGESELLSCHAFT
Patentabteilung / PB 15 - Postfach 13 20
D-4370 Marl 1(DE)

(72) Erfinder: Schüler, Ralf, Dr.
Mühlenstrasse 54
D-4350 Recklinghausen(DE)
Erfinder: Mügge, Joachim, Dr.
Droste-Hülshoff-Strasse 17
D-4358 Haltern(DE)
Erfinder: Dröscher, Michael, Prof. Dr.
Hetkerbruch 34
D-4270 Dorsten 11(DE)
Erfinder: Bartz, Wilfried, Dr.
Stargarder Strasse 12
D-4370 Marl(DE)
Erfinder: Feinauer, Roland, Dr.
Flämingstrasse 34
D-4370 Marl(DE)

(54) Thermoplastische Formmassen und Verfahren zu ihrer Herstellung.

(57) Aufgabe der Erfindung war es, Formmassen auf Basis von Polycarbonaten bereit zu stellen, deren Formteile sich neben hoher Festigkeit, Zähigkeit und Spannungsrißbeständigkeit durch ein hohes Kerbschlagniveau bei Temperaturen unter 0 °C auszeichenen.
Die jetzt gefundenen Formmassen enthalten
- 70 bis 98 Teile eines aromatischen Polycarbonats mit einer Viskositätszahl von 40 bis 100 cm$^3$/g und
- 2 bis 30 Teile eines gegenenfalls modifizierten Polyoctenylens.
Die Formmassen eignen sich insbesondere zur Herstellung von Formteilen, bei denen die oben aufgeführte Eigenschaftskombination verlangt wird.

EP 0 344 440 A2

## Thermoplastische Formmassen und Verfahren zu ihrer Herstellung

Polycarbonate zeichnen sich durch hohe Festigkeit und Zähigkeit aus. Allerdings ist die Spannungsrißbeständigkeit der aus reinen Polycarbonaten hergestellten Formteile nicht zufriedenstellend. Aus diesem Grunde setzt man in der Praxis vielfach Abmischungen von Polycarbonaten mit Polyalkylenterephthalaten ein (vgl. z. B. DE-OS 16 94 124).

In der Praxis wird die vergleichsweise niedrige Kälteschlagzähigkeit als unbefriedigend empfunden. Aus diesem Grunde ist man an Formmassen interessiert, die neben Polycarbonaten und gegebenenfalls Polyalkylenterephthalaten weitere Komponenten enthalten, die die Schlagzähigkeit in der Kälte verbessern. So ist beispielsweise der Zusatz von Acrylnitril-Butadien-Styrol-Copolymerisaten in der US-PS 4 172 103 beschrieben. Die Verbesserung der Schlagzähigkeit durch Zusatz von Polyetherestern ist der EP-OS 0 150 454 zu entnehmen.

Es ist vorgeschlagen worden, die Schlagzähigkeit von Formteilen auf Basis von Polycarbonaten durch Zusatz von selektiv hydrierten Styrol-Dien-Blockcopolymeren zu verbessern.

Auch der US-PS 4 320 212 sind Acrylatcopolymere als schlagzähmachende Zusätze zu Polycarbonatformmassen bekannt.

Es ist weiterhin bekannt, daß die Schlagzähigkeit durch Copolymere auf Basis von Ethylen und ungesättigten funktionalisierten Monomeren verbessert werden kann (vgl. DE-OS 30 04 942, DE-OS 32 34 174, EP-OS 0 020 605 und EP-OS 0 106 027).

Schließlich wird auch durch funktionalisierte Kautschuke das Kerbschlagniveau angehoben (vgl. DE-OS 23 43 609, JP-OSS 82/92 045 und 83/136 652).

Die bekannten Mischungen zeigen jedoch kein befriedigendes Kerbschlagniveau bei tiefen Temperaturen (vgl. EP-OS 0 106 027). In einer Reihe von Fällen ist die Schlagzähkomponente in der Polymermatrix schlecht dispergierbar. Setzt man hohe Energien zur besseren Verteilung der Schlagzähkomponente ein, sind thermische Schädigungen der Polymermatrix nicht auszuschließen.

Formmassen, die neben Polycarbonaten und Polyalkylenterephthalaten Polymerisate mit einer Glasübergangstemperatur von weniger als -20 °C enthalten, können zu Formteilen mit geringerer Verzugsneigung verarbeitet werden. Eine Verbesserung der Schlagzähigkeit wird hierdurch jedoch nicht erreicht (vgl. DE-OS 31 18 697).

Aus diesem Grunde würde der Fachmann wohl kaum auf die Idee kommen, Polyoctenylene, deren Glasübergangstemperatur bei -80 °C liegt, als Schlagzähmacher in Polycarbonatmassen einzusetzen. Es kommt hinzu, daß man im Hinblick auf die Verträglichkeit und Dispergierbarkeit der beiden Polymeren Bedenken haben mußte. Aus den Versuchen des Patentinhabers geht denn auch hervor, daß Polyoctenylene bei dem üblichen Verfahren zur Herstellung von Formmassen auf Basis von Polycarbonaten keine Verbesserung, sondern im Gegenteil sogar eine geringfügige Verschlechterung der Schlagzähigkeit bei Raumtemperatur bewirken. Dies mußte den Fachmann davon abhalten, Polyoctenylene als Schlagzähmacher in Betracht zu ziehen.

Ziel der vorliegenden Erfindung war es somit, Formmassen auf Basis von Polycarbonaten bereit zu stellen, deren Formteile sich neben hoher Festigkeit, Zähigkeit und Spannungsrißbeständigkeit durch ein hohes Kerbschlagniveau bei Temperaturen unter 0 °C auszeichnen. Es wurden jetzt solche Formmassen und ein Verfahren zu ihrer Herstellung gefunden. Die Formmassen enthalten 70 bis 98 Teile eines aromatischen Polycarbonats mit einer Viskositätszahl von 40 bis 100 cm³/g und 2 bis 30 Teilen Polyoctenylen, das gegebenenfalls modifiziert ist und dann vorzugsweise Epoxy-, Säure-, Säureanhydrid- oder Säureestergruppen enthält. Die Formmassen können - bezogen auf 100 Teile Polycarbonat - 20 bis 80 Teile eines Polyesters und darüber hinaus weitere Zusatzstoffe enthalten. Die Formmassen werden durch innige Vermischung der Komponenten hergestellt. Bei der Herstellung der Polyester enthaltenden Formmassen setzt man vorzugsweise einen flüssigen Radikalbildner zu und unterwirft das Gemisch einer thermischen Nachbehandlung.

Obwohl das Kerbschlagzähigkeitsniveau bei Zusatz von Polyoctenylenen bei Raumtemperatur geringer ist als ohne diesen Zusatz, stellt man überraschenderweise fest, daß dieses Niveau bei Temperaturen unter 0 °C - verglichen mit Formteilen, die kein Polyoctenylen enthalten, -deutlich erhöht ist.

Bei den Formmassen auf Basis von Polycarbonaten und Polyalkylenterephthalaten läßt sich eine erhebliche Verbesserung der Kerbschlagzähigkeit - sowohl bei Raumtemperatur als auch bei tiefer Temperatur -durch Zusatz von Polyoctenylenen erzielen, wenn man letztere modifiziert und die erhaltenen Mischungen einer thermischen Nachbehandlung unterzieht.

Im folgenden sollen die erfindungsgemäßen Formmassen näher beschrieben werden.

Unter Polycarbonaten im Sinne der vorliegenden Erfindung sind sowohl Homopolycarbonate als auch

2

Copolycarbonate zu verstehen. Vorzugsweise handelt es sich um Polycarbonate auf Basis von Diphenolen, wie beispielsweise Dihydroxydiphenylen, Di(hydroxyphenyl)-alkanen und Di(hydroxyphenyl)-ethern. Grundsätzlich sind aber auch alle anderen, für die Herstellung von Polycarbonaten geeigneten Diphenole verwendbar. Einzelheiten hierzu sind der Monographie von H. Schnell, "Chemistry and Physics of Polycarbonates", Intersience Publ., New York 1964, sowie der US-PS 2 999 835 und der DE-OS 22 48 817 zu entnehmen. Polycarbonate auf Basis von 2,2-Di(4-hydroxyphenyl)propan (im folgenden als "Bisphenol A" bezeichnet) werden besonders bevorzugt.

Die Synthese der Polycarbonate erfolgt in an sich bekannter Weise. Näheres hierzu ist beispielsweise der US-PS 2 999 835 und der GB-PS 772 627 zu entnehmen.

Die Polycarbonate weisen vorzugsweise Viskositätszahlen (J-Werte) von 20 bis 100 $cm^3/g$, gemessen nach DIN 7744, Teil 2, in einer Konzentration von 0,5 % in Dichlormethan, auf.

Die Polyoctenylene werden aus Cyclooocten mit Hilfe sogenannter Metathesekatalysatoren unter Öffnung des Ringes durch Polymerisation er halten (DE-OSS 16 45 038, 17 20 798, 17 70 143 und 18 05 158, DE-AS 12 99 868, GB-PSS 1 124 456, 1 194 013 und 1 182 975 sowie K. J. Ivin, Olefin Metathesis, S. 190 ff. (1983), Academic Press.

Die Doppelbindungen im Polyoctenylen können in der cis- oder trans-Form vorliegen. Bevorzugt ist ein Gehalt an trans-Doppelbindungen von mindestens 60 %, insbesondere mindestens 80 %.

Geeignet sind Polyoctenylene mit einer Viskositätszahl von 50 bis 250 $cm^3/g$, vorzugsweise 80 bis 160 $cm^3/g$, gemessen bei 25 °C in Toluol bei einer Konzentration von 0,5 g/100 $cm^3$ Lösung.

Die Polyoctenylene können Epoxy-, Carboxyl-, Carbonsäureanhydrid- oder -estergruppen als funktionelle Gruppen aufweisen. Die Einführung dieser funktionellen Gruppen erfolgt nach bekannten Verfahren in Lösung oder in der Schmelze.

Epoxygruppen lassen sich beispielsweise durch partielle Epoxidierung der Doppelbindungen mit Persäuren einführen. Der Gehalt an Epoxysauerstoff soll bei 0,5 bis 9, vorzugsweise 3 bis 8 Masse-% liegen. Alternativ gelangt man durch Pfropfung (beispielsweise mit Glycidylmethacrylat) zu geeigneten Epoxyderivaten.

Die Einführung von Carboxyl- bzw. Carbonsäureanhydridgruppen erfolgt durch Pfropfung mit geeigneten ungesättigten Monomeren, wie z. B. (Meth)acrylsäure, Maleinsäure(anhydrid), Fumarsäure, Maleinsäureester, Fumarsäureester, Norbornendicarbonsäureanhydrid, Itaconsäure(anhydrid) sowie den entsprechenden Methyl-, Ethyl- und Butylestern der Säuren. Erfahrungsgemäß ist es ausreichend, 0,2 bis 5 Gewichtsprozent, vorzugsweise 0,5 bis 4 Gewichtsprozent Monomer - bezogen auf das modifizierte Polyalkenamere - einzusetzen.

Die Pfropfung kann in Lösung oder in der Schmelze mit oder ohne radikalbildende Zusätze erfolgen. Solche Verfahren sind beispielhaft der US-PS 3 882 194 oder der DE-OS 2 401 149 zu entnehmen. Der Pfropfungsgrad läßt sich IR-spektroskopisch ermitteln.

Bei der Einführung der funktionellen Gruppen in die Polyoctenylene ist darauf zu achten, daß keine Vernetzung stattfindet. Der Gelgehalt der modifizierten Polyoctenylene, bestimmt als unlöslicher Anteil in heißem Toluol, soll daher kleiner als 10 Gewichtsprozent, vorzugweise kleiner als 5 Gewichtsprozent, sein.

Der mittlere Durchmesser der ggf. modifizierten Polyoctenylenteilchen in den Formmassen soll vorzugsweise kleiner als 10 μm, insbesondere kleiner als 1 μm sein. Diese Anforderungen lassen sich durch eine gute Dispergierung erreichen.

Als Polyester im Sinne der Erfindung sind lineare, film- oder faserbildende, teilkristalline Kondensationsprodukte aus aromatischen Dicarbonsäuren mit 8 bis 14 Kohlenstoffatomen und mindestens einem Glykol der Formel $HO(CH_2)_nOH$ mit n = 2 bis 12, und/oder Neopentylglykol und/oder 1,4-Cyclohexandimethanol anzusehen. Bis 20 Mol-% der aromatischen Dicarbonsäuren können durch (cyclo)aliphatische Dicarbonsäuren mit 2 bis 12 Kohlenstoffatomen ersetzt sein.

Bevorzugt ist die Klasse der Poly(alkylenterephthalate), wobei bis zu 20 Mol-% der Terephthalsäure durch andere Dicarbonsäuren, wie beispielsweise Isophthalsäure, Phthalsäure, Cyclohexan-1,4-dicarbonsäure, Adipinsäure, Azelainsäure und Decandicarbonsäure, ersetzt sein können. Bevorzugte Poly-(alkylenterephthalate) sind Poly(ethylenterephthalat) und Poly(butylenterephthalat). In Poly-(ethylenterephthalaten) können bis zu 20 Mol-% des Ethylenglykols durch andere übliche Diole, wie beispielsweise Butandiol-(1,4), Propandiol-(1,3), Hexandiol-(1.6), Neopentylglykol, 1,4-Dimethylolcyclohexan und Dodecandiol-(1,12), im Poly(butylenterephthalat) bis zu 20 Mol-% des Butandiol-(1,4) durch andere übliche Diole, wie beispielsweise Ethylenglykol, Propandiol-(1,3), Hexandiol-(1,6), 1,4-Dimethylolcyclohexan und Dodecandiol-(1,12) ersetzt sein.

Die Molgewichte der Polyester sollen so eingestellt sein, daß sie Viskositätszahlen (J-Werte) von 80 bis 240 $cm^3/g$, gemessen nach DIN 53 728, Teil 3, in einer Konzentration von 0,5 g in 100 $cm^3$ Lösemittel, entsprechen.

3

Die Additive umfassen übliche Stabilisatoren, Weichmacher, Verarbeitungshilfsmittel, Gleit- und Entformungshilfsmittel, Antistatika, Farb- und Flammschutzmittel etc. Es ist auch möglich, Füll- und Verstärkungsstoffe wie Mineralien, Glas- oder Kohlenstoffasern, Mikroglaskugeln, Ruß u. a. einzusetzen.

Das Mischen der Komponenten ist problemlos in einem handelsüblichen Doppelschneckenkneter zu erreichen. Hierbei achtet man vorzugsweise darauf, daß der mittlere Durchmesser der Polyoctenylenteilchen unter 10 μm, insbesondere unter 1 μm, liegt. Wenn durch Verwendung von Schnecken mit z. B. Knetblöcken oder Zahnscheiben die Mischwirkung zusätzlich unterstützt wird, lassen sich hohe Durchsätze erzielen. Die Temperatur der Schmelze liegt üblicherweise 10 bis 80 °C über der Schmelztemperatur der Polymeren.

Bei der Herstellung von Polyestern enthaltenden Formmassen setzt man vorzugsweise Radikalbildner, also etwa handelsübliche Azoverbindungen oder Peroxide, vorzugsweise Dialkylperoxide oder Alkylpersäureester, ein.

Besonders bevorzugt werden Bis-t-alkylperoxide und t.-Alkylpersäureester, die bei 50 °C, insbesondere bei Raumtemperatur flüssig und bei der Applikationstemperatur stabil sind.

Beispiele für geeigete Radikalbildner sind t-Butylperneodecanoat, t-Amylperpivalat, t-Butylperpivalat, Bis-(3,5,5-trimethylhexanoyl)-peroxid, Dioctanoylperoxid, Didecanoylperoxid, Dilauroylperoxid, t-Butyl-per-(2-ethylhexanoat), t-Butylperisobutyrat, t-Butyl-permaleinat, 1,1-Bis-(t-butylperoxy)-3,3,5-trimethyl-cyclohexan, 1,1-Bis-(t-butylperoxy)-cyclohexan, t-Butylperoxy-isopropylcarbonat, t-Butyl-per-(3,5,5-trimethylhexanoat), 2,5-Dimethylhexyl-2,5-diperbenzoat, t-Butylperacetat, t-Butyl-perbenzoat, 5-Amylperbenzoat, 2,2-Bis-(t-butylperoxy)-butan, Dicumylperoxid, 2,5-Dimethylhexan-2,5-di-t-butylperoxid, t-Butyl-cumylperoxid, Bis-(t-butylperoxy)-3,5-dimethyldioxolan-1,2, Di-t-butylperoxid, 2,5-Dimethylhexin-(3)-2,5-di-t-butylperoxid, Bis-(t-butylperoxyisopropyl)-benzol sowie insbesondere 2,2'-Azo-bis-(2-acetoxybutan) und 2,2'-Azo-bis-(2-acetoxypropan).

Die organischen Radikalbildner werden in Mengen von 0,05 bis 5 Gewichtsprozent, vorzugsweise von 0,1 bis 3 Gewichtsprozent, bezogen auf die Gesamtmenge Polycarbonat, Polyoctenylen und Polyester eingesetzt.

Es ist möglich, den Radikalbildner bereits während oder gleich nach dem Vermischen der Polymerkomponenten unter Bedinungen, die noch keine spontanen Zerfall der Radikalbildner bewirken, in die Schmelze einzuarbeiten.

Es kann aber auch erst die Mischung der Komponenten separat hergestellt werden und dann, in einem weiteren Schritt - z. B. während des Einarbeitens von weiteren Hilfs- und Zusatzstoffen - der Radikalbildner zugemischt werden. Eine weitere Möglichkeit besteht darin, den Radikalbildner in flüssiger Form auf festes Granulat aufzubringen und ihn eindiffundieren zu lassen.

Es ist auch möglich, den Radikalbildner in Lösung zu applizieren. Die Lösemittel können während oder nach der Zersetzungsphase durch Anlegen von Vakuum (z. B. Entgasungsstufe bei Extrusion) wieder entfernt werden. Vorteilhaft ist die Einbringung der Radikalbildner zusammen mit flüssigen Hilfs- und Zusatzstoffen, sofern letztere keine unerwünschte Zersetzung induzieren. Der Dampfdruck der Radikalbildner sollte während der Imprägnierphase vorzugsweise unter 1 bar liegen, um zusätzliche technische Maßnahmen zu vermeiden.

Der Radikalbildner muß Gelegenheit haben, in das Granulat einzudringen und auf die Komponenten einzuwirken. Dies bedeutet unter anderem, daß die Temperatur der Formmassen nicht mehr als 10 °C unterhalb der Erweichungstemperatur der Mischung liegen darf.

In der Regel ist bei homogener Verteilung des Radikalbildners eine Einwirkungszeit von 4 Halbwertszeiten bei der jeweiligen Temperatur ausreichend.

Die Polyester enthaltenden Formmassen sollten einer thermischen Nachbehandlung, beispielsweise in einem Entgasungsextruder, unterworfen werden. Dazu wird die als Granulat vorliegende Masse in Abwesenheit von Sauerstoff während mehrerer Stunden, vorzugsweise in einem Fließbett, auf eine Temperatur von ≥ 5° unterhalb der Temperatur, bei welche die Masse zu schmelzen beginnt, erwärmt. Vorzugsweise beträgt die Temperatur jedoch mindestens 150 °C. Die thermische Nachbehandlung kann auch vorteilhaft nach den in den DE-PSS 30 33 468 und 33 33 469 beschriebenen Methoden durchgeführt werden.

Die Einarbeitung der Zusatzstoffe kann prinzipiell in jeder Stufe des Verfahrens erfolgen, sofern sichergestellt ist, daß dadurch der Zerfall des Radikalbildners nicht in unerwünschter Weise gestört wird. Dem Fachmann sind die Zusammenhänge zwischen der Basizität der Zusatzstoffe und dem radikalischen Zerfall bekannt bzw. können von ihm leicht in Vergleichsversuchen ermittelt werden.

Die folgenden Beispiele sollen die Erfindung erläutern.

Die als Vergleichskriterium herangezogenen Kerbschlagzähigkeitsprüfungen nach DIN 53 453 wurden an gespritzten Normkleinstäben bei den angegebenen Temperaturen durchgeführt. Zwischen dem Verspritzen und der Prüfung wurden die Stäbe 24 Stunden bei 60 % relativer Feuchte gelagert.

4

Alle Mengenangaben in Teilen und % verstehen sich als Massenteile bzw. Massen-%, soweit nicht anders vermerkt.

Die J-Werte der Compounds wurden in Anlehnung an DIN 53 728, Teil 3, in einer Mischung von Phenol und o-Dichlorbenzol (Gewichtsverhältnis 1 : 1) bei einer Konzentration von 0,5 % bestimmt. Die Bestimmung der J-Werte des Polyoctenylens erfolgte analog zu DIN 53 726.

Die Bestimmung der Schmelzviskosität (MVI) wurde entsprechend DIN 53 735 bei 250 °C und einer Belastung von 2,16 kg durchgeführt.

1. Polyoctenylene

1.1 Polyoctenylen

Es wurde ein Polyoctenylen mit einem J-Wert von 120 ml/g und einem trans-Gehalt von 80 % eingesetzt. Ein solches Produkt ist unter dem Namen VESTENAMER[R] 8012 im Handel erhältlich (Hersteller: HÜLS AKTIENGESELLSCHAFT, D-4370 Marl 1). Weitere Kenndaten dieses Produktes sind der Zeitschrift "Kautschuk, Gummi, Kunststoffe", 1981, Seiten 185 bis 190, sowie dem Hüls-Merkblatt Nr.2247 "VESTENAMER[R] 8012" zu entnehmen.

1.2 mit Fumarsäure modifiziertes Polyoctenylen

2 Gewichtsteile Fumarsäure und 98 Gewichtsteile Polyoctenylen gemäß 1.1 wurden in einem Doppelschneckenextruder (Typ ZE 40 der Fa. Berstorff, Maschinenbau GmbH, Postfach 629, D-3000 Hanover 1) bei 310 °C umgesetzt und anschließend granuliert. Aus dem Vergleich der IR-Spektren des Originalextrudats und des durch Umfüllen von freien Monomeren gereinigten Produktes war zu erkennen, daß mehr als 80 % der Fumarsäure gebunden sind.
Gelgehalt: < 1 Gewichtsprozent
Viskositätszahl J = 111 cm³/g

1.3 mit Maleinsäureanhydrid (MSA) modifiziertes Polyoctenylen

1 Gewichsteil Maleinsäureanhydrid und 99 Gewichtsteile Polyoctenylen gemäß 1.1 wurden in einem Doppelschneckenextruder (Typ ZE 40 - Fa. Berstorff) bei 310 °C umgesetzt und anschließend granuliert. Aus dem Vergleich der IR-Spektren des Originalextrudates und des durch Umfällen von freien Monomeren gereinigten Produktes war zu erkennen, daß mehr als 80 % des MSA gebunden sind.
Gelgehalt: < 1 Gewichtsprozent
Viskositätszahl J = 111 cm³/g

2. Herstellung der Formmassen auf Basis von Polycarbonaten und Polyoctenylenen

Beispiele 2.1 bis 2.9

Handelsübliches Polycarbonat (J = 60 cm³/g, DUROLON 2500; es handelt sich um ein mittelviskoses Polycarbonat der F. Polycarbonato do Brasil s. a. Salvador / Bahia) sowie das jeweilige Polyoctenylen wurden entsprechend den Angaben der Tabelle 1 in einem Kneter (Automatik, ZCM-41/46 der Fa. Apparate-Maschinenbau Henschel GmbH, Ostring 19, D-8754 Großostheim 2) bei 270 °C gemischt, als Strang extrudiert, granuliert und getrocknet.

Beispiele 2.10 bis 2.14

Polycarbonat (MAKROLON[R] 2800, J = 63 cm³/g; es handelt sich um ein mittelviskoses Produkt der Fa. Bayer AG, D-5090 Leverkusen. Bzgl. Einzelheiten wird auf die "Anwendungstechnische Information" Nr.

EP 0 344 440 A2

387/84 verwiesen) wurde mit unterschiedlichen Mengen eines funktionalisierten Polyoctenylens gemäß 1.3 in einem Kneter (Automatik, ZCM-41/46) bei 270 °C gemischt, als Strang extrudiert, granuliert und getrocknet.

Von allen Produkten wurden J-Werte in Anlehnung an DIN 53 728, Teil 3, MVI-Werte (250/5) nach DIN 53 735 sowie die Kerbschlagzähigkeit nach DIN 53 453 bei -20 °C und -40 °C gemessen (vgl. Tabelle 2).

3. Herstellung der Formmassen auf Basis von Polycarbonaten, Polyestern und Polyoctenylenen (siehe Tabelle 3)

Vergleichsbeispiele A und B

Handelsübliches Polybutylenterephthalat (J = 110 cm³/g, VESTODUR[R] 1000 der HÜLS AKTIENGESELLSCHAFT, D-4370 Marl), ein handelsübliches Polycarbonat (J = 63 cm³/g, MAKROLON[R] 2800) und das funktionalisierte Polyoctenylen gemäß Beispiel 1.2 wurden entsprechend den Angaben in der Tabelle 3 in einem BUSS-Co-Kneter, Typ MDK E 46-11D der Fa. Buss AG, CH-4133 Pratteln, 1/Schweiz, bei 260 °C gemischt, als Strang extrudiert, granuliert und getrocknet.

Vergleichsbeispiele C und D

Jeweils ein Teil der nach Beispiel A und B erhaltenen Produkte wurde 24 Stunden bei 200 °C unter Stickstoffatmosphäre in einem Taumeltrokkner nachbehandelt.

Vergleichsbeispiel E

Ein Teil des nach Beispiel A erhaltenen Produktes wurde mit 1 Gewichtsprozent t-Butylperbenzoat 3 Stunden bei 90 °C, 2 Stunden bei 150 °C und 16 Stunden bei 200 °C unter Stickstoff nachbehandelt.

Beispiel 3.1

Eine Mischung mit einer Zusammensetzung gemäß Beispiel B wurde mit 1 Gewichtsteil t-Butylperbenzoat behandelt und anschließend 16 Stunden bei 200 °C unter Stickstoff behandelt.

Tabelle 1:

| | | | Beispiele | | | | | | | | |
|---|---|---|---|---|---|---|---|---|---|---|---|
| | | | 2.1 | 2.2 | 2.3 | 2.4 | 2.5 | 2.6 | 2.7 | 2.8 | 2.9 |
| Teile Durolon 2500 | | | 100 | 90 | 80 | 90 | 80 | 90 | 80 | 90 | 80 |
| Teile VESTENAMER 8012 | | | - | 10 | 20 | - | - | - | - | - | - |
| Teile VESTENAMER 8012/0,5 MSA | | | - | - | - | 10 | 20 | - | - | - | - |
| Teile VESTENAMER 8012/1,0 MSA | | | - | - | - | - | - | 10 | 20 | - | - |
| Teile VESTENAMER 8012/1,5 MSA | | | - | - | - | - | - | - | - | 10 | 20 |
| Lösungsviskosität J | DIN 53 728 cm³/g | | 58 | 58 | 57 | 62 | 63 | 63 | 64 | 62 | 63 |
| Schmelzindex MVI (280/5) | DIN 53 735 cm³/10 min | | 34,5 | 36,2 | 32,9 | 17,2 | 12,6 | 15,6 | 10,5 | 15,8 | 9,6 |
| Kerbschlagzähigkeit | 23 °C | ISO | 82 | 58,5 | 39,8 | 64,8 | 46,8 | 65,2 | 51,8 | 61,6 | 51,6 |
| | 0 °C | 180 | 11,9 | 40,5 | 39,2 | 55 | 35,9 | 53,6 | 43,8 | 50,9 | 46,8 |
| | -20 °C | kJ/m² | 11,1 | 22,9 | 29,2 | 38,4 | 26,4 | 32,5 | 25,9 | 24,9 | 29,3 |
| | -40 °C | | 10,9 | 20,9 | 22,6 | 24,9 | 20,3 | 23,1 | 20,5 | 21,4 | 22 |

6

Tabelle 2:

| | | | Beispiele | | | | |
|---|---|---|---|---|---|---|---|
| | | | 2.10 | 2.11 | 2.12 | 2.13 | 21.4 |
| Teile MAKROLON[R] 2800 | | | 100 | 95 | 92,5 | 87,5 | 85 |
| Teile VESTENAMER[R] 8012/0,5 MSA | | | - | 5 | 7,5 | 12,5 | 15 |
| Lösungsviskosität J | | DIN 53 728 cm³/g | 63 | 63 | 65 | 64 | 64 |
| Schmelzindex MVI (280/5) | | DIN 53 735 cm³/10 min | 21,5 | 20,4 | 19,7 | 18,2 | 16,5 |
| Kerschlagzähigkeit | -20 °C | ISO 180 kJ/m² | 14,2 | 33 | 54,1 | 55,3 | 54,2 |
| | -40 °C | | 11,8 | 18,8 | 23,5 | 42,9 | 50,9 |

Tabelle 3:

| | | | Beispiele | | | | | |
|---|---|---|---|---|---|---|---|---|
| | | | A | B | C | D | E | 3,1 |
| Teile Polyester | | | 60 | 55 | 60 | 55 | 60 | 55 |
| Teile Polycarbonat | | | 40 | 35 | 40 | 35 | 40 | 35 |
| Teile mod. Polyoctenylen | | | - | 10 | - | 10 | - | 10 |
| Nachbehandlung: | | | | | | | | |
| Teile Peroxid | | | - | - | - | - | 1 | 1 |
| 90 °C | | | - | - | - | - | 3 h | 3 h |
| 150 °C | | | - | - | - | - | 4 h | 4 h |
| 200 °C | | | - | - | 20 h | 20 h | 16 h | 16 h |
| Lösungsviskosität J | | DIN 53 728 cm³/g | 84 | 85 | 120 | 119 | 110 | 129 |
| Schmelzindex MVI (250/5) | | DIN 53 735 cm³/10 min | 48 | 42 | 17 | 9,2 | 18 | 7,8 |
| Kerbschlagzähigkeit | 23 °C | DIN | 4,9 | 6,5 | 12,1 | 11/11TB | 11,4 | 11/11TB |
| | 0 °C | 53 | 3,7 | 4,6 | 5,9 | 19,8 | 5 | 11/11TB |
| | -20 °C | 453 | 3,5 | 4,5 | 4,9 | 13,6 | 4,8 | 30,9 |
| | -40 °C | kJ/m³ | 3,3 | 3,8 | 4,7 | 9,9 | 4,3 | 13,5 |
| TB = Teilbruch | | | | | | | | |

## Ansprüche

1. Thermoplastische Formmassen, enthaltend
- 70 bis 98 Teile eines aromatischen Polycarbonats mit einer Viskositätszahl von 40 bis 100 cm³/g und
- 2 bis 30 Teile eines gegenenfalls modifizierten Polyoctenylens.

2. Thermoplastische Formmassen gemäß Anspruch 1,
dadurch gekennzeichnet,
daß das Polyoctenylen als funktionelle Gruppen Epoxy-, Säure-, Säureanhydrid oder Säureestergruppen enthält.

EP 0 344 440 A2

3. Thermoplastische Formmassen gemäß Anspruch 2,
dadurch gekennzeichnet,
daß die Formmassen - bezogen auf 100 Teile Polycarbonat - 20 bis 80 Teile eines Polyesters (Viskositätszahl 80 bis 240 cm$^3$/g) einer aromatischen Dicarbonsäure mit einem zweiwertigen aliphatischen Alkohol enthalten.

4. Thermoplastische Formmassen nach den Ansprüchen 1 bis 3,
dadurch gekennzeichnet,
daß die Formmassen weitere Zusatzstoffe wie Stabilisatoren, Weichmacher, Verarbeitungshilfsmittel, Gleit- und Entformungshilfsmittel, Antistatika, Farb- und Flammschutzmittel, Füll- und Verstärkungsstoffe enthalten.

5. Verfahren zur Herstellung der Formmassen gemäß den Ansprüchen 1 bis 4,
dadurch gekennzeichnet,
daß die Komponenten innig gemischt werden.

6. Verfahren zur Herstellung der Formmassen gemäß Anspruch 3,
dadurch gekennzeichnet,
daß man

a) die Komponenten innig vermischt,

b) gegebenenfalls einen vorzugsweise flüssigen Radikalbildner in einer Menge von 0,05 bis 5 Gewichtsprozent - bezogen auf die gesamte Formmasse - zusetzt und

c) das erhaltene Gemisch einer thermischen Nachbehandlung unterwirft.

8